Europäisches Patentamt

European Patent Office

Office européen des brevets

(19)

(11) **EP 1 501 245 A2**

(12) **DEMANDE DE BREVET EUROPEEN**

(43) Date de publication:
**26.01.2005 Bulletin 2005/04**

(51) Int Cl.⁷: **H04L 12/56**

(21) Numéro de dépôt: **04291344.2**

(22) Date de dépôt: **28.05.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **22.07.2003 FR 0308905**

(71) Demandeur: **Arteris**
**75008 Paris (FR)**

(72) Inventeurs:
• **Douady, César**
**91400 Orsay (FR)**
• **Lecler, Jean-Jacques**
**06800 Cagnes sur Mer (FR)**

(74) Mandataire: **Casalonga, Axel**
**BUREAU D.A. CASALONGA - JOSSE**
**Paul-Heyse-Strasse 33**
**80336 München (DE)**

(54) **Dispositif et procédé de transmission d'un message**

(57) Procédé de déclenchement de la transmission d'un message dans un dispositif comprenant un moyen de commutation autonome (5) comprenant au moins une entrée comprenant un moyen de mémorisation (7) pourvu d'une entrée (6) et une sortie (8). Dans ce procédé, on élabore un coefficient représentatif du rapport des fréquences de cadencement d'horloges d'entrée ($F_w$) et de sortie ($F_r$), on compare la quantité de données stockées dans le moyen de mémorisation (7) de l'entrée où arrive ledit message par rapport au produit dudit coefficient et de la longueur du message, et on décide dudit déclenchement lorsque la quantité de données stockées dans le moyen de mémorisation de l'entrée où arrive le message est supérieure au produit du coefficient par la longueur du message.

# FIG.3

EP 1 501 245 A2

**Description**

La présente invention concerne un procédé et un dispositif de transmission d'un message.

Les réseaux d'interconnexions sont des dispositifs de transmission de messages entre différents agents ou entités d'un réseau de communication.

Ces réseaux d'interconnexions sont généralement composés de deux parties distinctes qui interagissent, à savoir une partie matérielle comprenant des liens physiques et un contrôleur de réseaux, câblé ou micro programmé, qui exécute un protocole de bas niveau, et une partie logicielle pour effectuer l'interface avec des fonctions logicielles de plus haut niveau.

Un réseau d'interconnexions idéal serait certainement un réseau totalement interconnecté, c'est-à-dire un réseau dans lequel chaque paire d'agents est connectée par une liaison point-à-point. Ceci est totalement irréaliste dès que l'on dépasse quelques dizaines d'agents. Il est donc nécessaire que le réseau d'interconnexions puisse assurer l'ensemble des communications entre agents avec un nombre limité de liens par agent.

Il existe des agents spécialisés pour effectuer un routage ou aiguillage des messages circulant sur le réseau d'interconnexions.

Ces réseaux d'interconnexions comprennent des dispositifs de transmission ou routeurs ("switch" en langue anglaise), une organisation du réseau assurant le lien entre les routeurs et les autres agents, et un ensemble de routage qui assure la circulation des messages au sein de l'organisation du réseau.

Un routeur est un agent actif du réseau d'interconnexions qui reçoit en entrée des messages venant d'un ou plusieurs agents et qui achemine ou route chacun de ces messages respectivement vers leur agent de destination ou vers un autre routeur. Ce routage est effectué au moyen de l'adresse de l'agent destinataire du message, dont l'adresse est présente dans l'en-tête du message à router.

L'organisation d'un réseau est la structure physique reliant les différents noeuds ou points de connexions d'un réseau d'interconnexions.

L'ensemble de routage gère la manière dont est routé, ou acheminé, un message depuis un agent source émettant le message vers un agent destination du message à travers des routeurs en empruntant un chemin de routage. Un message est, bien entendu, une suite de données informatiques, c'est-à-dire une suite de bits ou d'octets. Chaque message comprend un en-tête de message qui comprend principalement l'adresse de destination du message et la taille du message.

Tout agent présent dans un réseau d'interconnexions peut émettre et/ou recevoir des messages. La technique de routage détermine la manière dont les messages sont transmis de l'agent émetteur vers l'agent destinataire. Pour un réseau d'interconnexions donné, il existe différentes techniques de routage, pour lesquelles les objectifs sont de réduire la latence de fin de message, ou délai d'acheminement de fin de message, d'un message, depuis l'agent émetteur jusqu'à l'agent destinataire, augmenter le débit global, et améliorer la fiabilité globale du réseau. La latence inclut tous les temps d'attente dus à la manière dont se propagent les messages dans le réseau et plus particulièrement à travers les dispositifs de transmission de messages ayant la charge de router les messages. Le débit est la quantité de données informatiques qu'un lien du réseau peut transporter par unité de temps, et peut être mesuré localement sur un lien du réseau d'interconnexions ou globalement sur l'ensemble du réseau d'interconnexions. La fiabilité d'un réseau est importante, car la probabilité d'erreurs croit rapidement avec le nombre de noeuds dans un réseau d'interconnexions.

De nombreux algorithmes de routage dans des réseaux d'interconnexions existent. Deux parmi les plus répandus sont le routage "stocke et transmet" ("store and forward" en langue anglaise), et le routage "trou de ver" ("wormhole" en langue anglaise). Ces mécanismes sont par exemple décrits aux adresses électroniques suivantes :

> http://www.cs.bu.edu/~best/crs/cs551/lectures/
> lecture-15.html,
> http://www.proj-mission.org/
> EE660/Gautam7.4.pdf ,
> http://www.comp.mq.edu.au/courses/
> comp439/lectures/comm 4.pdf , et
> http:l/www.cs.uh.edu/~resch/TUTORIALS/
> SLIDES_TSS_02/2-21-2002.pdf.

L'algorithme de routage "stocke et transmet" nécessite d'avoir un moyen de mémorisation de type premier entré premier sorti ou FIFO ("First In First Out") d'une taille au moins égale à la longueur maximale d'un message. Lorsque la taille maximale d'un message est grande, le coût matériel et la taille de mémoire sont importants. De plus la latence de fin de message sera relativement importante, ce qui peut être critique pour certains réseaux.

L'algorithme de routage "trou de ver" minimise la latence de fin de message, mais ne permet pas de contrôler l'intégrité du message sur des noeuds intermédiaires situés entre l'agent émetteur et l'agent destinataire. La validité du contenu du message ne peut alors être contrôlée qu'au niveau de l'agent destinataire, c'est-à-dire de l'agent final.

Au vu de ce qui précède, l'invention a notamment pour but d'effectuer un routage en ayant une latence de fin de message identique ou la plus proche de la latence de fin de message de l'algorithme de routage "trou de ver" mais sans avoir de trous intra-message. On entend par trou un intervalle entre deux tops de cadencement d'horloge non utilisé pour transmettre des données.

Ainsi, selon un aspect de l'invention, il est proposé un procédé de transmission d'un message dans un dispositif comprenant un moyen de commutation autonome comprenant au moins une entrée comprenant un moyen de mémorisation pourvu d'une entrée et une sortie. On élabore un coefficient $\alpha$ représentatif du rapport des fréquences $F_w$ et $F_r$ de cadencement d'horloges respectivement d'entrée et de sortie, on compare la quantité de données stockées dans le moyen de mémorisation de l'entrée où arrive ledit message par rapport au produit dudit coefficient $\alpha$ et de la longueur du message, et on décide dudit déclenchement lorsque la quantité de données stockées dans le moyen de mémorisation de l'entrée où arrive le message est supérieure au produit du coefficient $\alpha$ par la longueur du message.

Ce routage permet d'avoir une latence de fin de message minimale, en s'approchant d'une probabilité nulle de trous intra-messages.

Dans un mode de mise en oeuvre préféré, on décide en outre dudit déclenchement lorsque le message est entièrement mémorisé dans le moyen de mémorisation de l'entrée où arrive le message.

Lorsqu'un message est entièrement mémorisé, pour ne pas augmenter la latence de fin de message, et provoquer un blocage ("dead lock" en langue anglaise) d'un dispositif selon un aspect de l'invention, il est transmis immédiatement.

Dans un mode de mise en oeuvre avantageux, on décide en outre dudit déclenchement lorsque le moyen de mémorisation de l'entrée où arrive le message est plein.

Cela est nécessaire si on ne veut pas provoquer un blocage du dispositif.

Dans un mode de mise en oeuvre préféré, le message comprenant un en-tête, on récupère en outre la longueur du message dans l'en-tête du message.

La connaissance de la longueur du message étant nécessaire, il faut récupérer cette information dans l'en-tête du message.

Dans un mode de mise en oeuvre avantageux, on élabore ledit coefficient ci nar la relation suivante :

$$\alpha = \mathrm{Max}\left(0\,;1-\frac{F_w}{F_r}\right)$$

dans laquelle $F_w$ est la fréquence de cadencement d'horloge d'entrée ou d'écriture de l'entrée sur laquelle arrive le message, $F_r$ est la fréquence de cadencement d'horloge de sortie ou de lecture sur la sortie sur laquelle est transmis le message, et Max est la fonction maximum.

Dans un mode de mise en oeuvre préféré, lorsque lesdites fréquences de cadencement d'horloge d'entrée $F_w$ et de sortie $F_r$ sont des constantes connues, ledit paramètre $\alpha$ est constant et est mémorisé.

Dans ce cas, il n'est pas alors nécessaire de recalculer le paramètre $\alpha$.

Dans un mode de mise en oeuvre avantageux, lorsque les horloges de cadencement des entrées et des sorties sont régulières, ledit moyen de prédiction comprend un moyen pour calculer le rapport desdites fréquences d'entrée $F_w$ et de sortie $F_r$.

Des horloges de cadencement sont dites régulières lorsqu'il y a émission d'un top d'horloge même quand il n'y a pas de données transmises, c'est-à-dire lorsqu'il y a un trou intra-message ou inter-message. Dans ce cas il est alors aisé d'obtenir le rapport desdites fréquences d'entrée $F_w$ et de sortie $F_r$.

Dans un mode de mise en oeuvre préféré, on asservit ledit paramètre $\alpha$ sur un taux prédéterminé de présence de trous intra-messages dans les messages.

Quand on ne connaît pas le rapport desdites fréquences d'entrée $F_w$ et de sortie $F_r$, on sait obtenir le nombre de trous intra-messages. Le but est de tendre vers un nombre de trous intra-message très faible, afin d'améliorer le débit, sans augmenter la latence de fin de message

Il est également proposé, selon un autre aspect de l'invention, un dispositif de transmission d'un message, comprenant un moyen de commutation autonome dont au moins une entrée comprend un moyen de mémorisation pourvu d'une entrée et une sortie. Le dispositif comprend un moyen d'élaboration d'un coefficient $\alpha$ représentatif du rapport des fréquences de cadencement d'horloges d'entrée $F_w$ et de sortie $F_r$, un moyen de comparaison de la quantité de données stockées dans le moyen de mémorisation de l'entrée où arrive ledit message par rapport au produit dudit coefficient $\alpha$ et de la longueur du message, et un moyen de déclenchement de la transmission du message lorsque la quantité de données stockées dans le moyen de mémorisation de l'entrée où arrive le message est supérieure au produit du coefficient $\alpha$ par la longueur du message.

Dans un mode de réalisation préféré, le moyen de déclenchement de la transmission du message est apte à s'activer en outre lorsque le message est entièrement mémorisé dans le moyen de mémorisation de l'entrée où arrive le message.

Dans un mode de réalisation avantageux, le moyen de déclenchement de la transmission du message est apte à s'activer en outre lorsque le moyen de mémorisation de l'entrée où arrive le message est plein.

Dans un mode réalisation préféré, le message comprenant un en-tête, le dispositif comprend un moyen de traitement apte à récupérer la longueur du message dans l'en-tête du message.

Dans un mode de réalisation avantageux, le moyen de mémorisation de l'entrée sur laquelle arrive le message est de type premier entré premier sorti.

Ce type de mémoire, appelé également file FIFO, est la plus couramment utilisée.

D'autres buts, caractéristiques et avantages de l'invention apparaîtront à la lecture de la description suivante, donnée à titre d'exemple non limitatif, et faite en référence aux dessins annexés sur lesquels :

- la figure 1 illustre l'algorithme de routage "stocke et transmet", de l'art antérieur ;
- la figure 2 illustre l'algorithme de routage "trou de ver", de l'art antérieur ;
- la figure 3 est un schéma synoptique d'un dispositif selon l'invention ;
- la figure 4 illustre un aspect du procédé selon l'invention ; et
- la figure 5 illustre un dispositif selon l'invention.

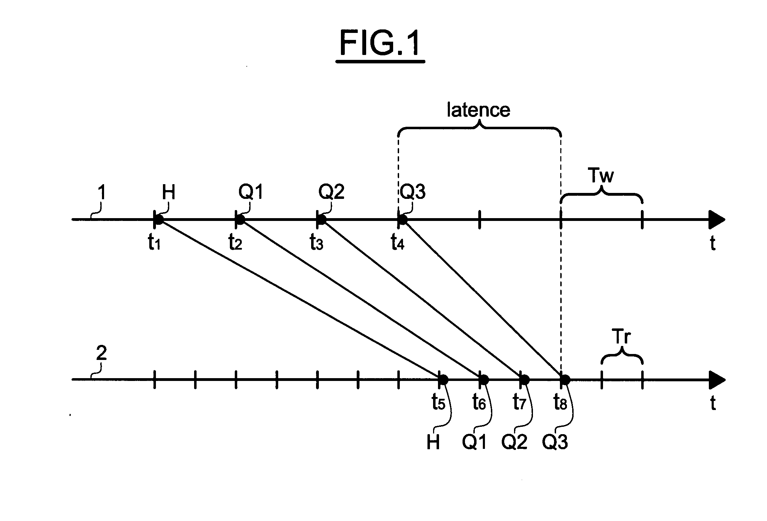

La figure 1 illustre l'algorithme "stocke et transmet" utilisé par un dispositif comprenant un moyen de commutation autonome 5 et un moyen de mémorisation 7 de type premier entré premier sorti à une entrée et une sortie, pour au moins une entrée du dispositif, ayant respectivement des fréquences de cadencement d'horloges $F_w$ et $F_r$. Sur cet exemple, les fréquences de cadencement d'horloges sont telles que $F_r = 2 \times F_w$. L'axe 1 représente le temps et les tops d'horloge sur une entrée du dispositif, avec une période $T_w$ séparant deux tops d'horloge correspondant à la fréquence $F_w$. L'axe 2 représente le temps et les tops d'horloge sur une sortie du dispositif, avec une période $T_r$ séparant deux tops d'horloge correspondant à la fréquence $F_r$. A titre d'exemple un message composé de 4 quantums de données est traité. Il comprend un en-tête de message H suivi des quantums $Q_1$, $Q_2$ et $Q_3$. Un quantum correspond par exemple à une quantité de données de un, deux ou quatre octets.

Le routage "stocke et transmet" va stocker en mémoire, sous forme de file (FIFO), le message en entrée composé des quantums H, $Q_1$, $Q_2$ et $Q_3$. A un instant $t_1$, le quantum H arrive en entrée et est stocké en mémoire, puis arrivent et sont stockés respectivement les quantums $Q_1$, $Q_2$ et $Q_3$ aux instants $t_2$, $t_3$, et $t_4$ correspondants à des tops consécutifs de cadencement de l'horloge en entrée. L'en-tête H du message contient des informations comprenant la taille dudit message et sa destination. Dès que le message est complètement mémorisé, sur le top suivant $t_5$ de l'horloge de la sortie sur laquelle le moyen de commutation autonome transmet le message, on transmet le quantum d'entête H, suivi respectivement, aux tops suivants de cadencement d'horloge de sortie $t_6$, $t_7$, et $t_8$, des quantums $Q_1$, $Q_2$ et $Q_3$.

Comme le montre la figure 1, on a alors une latence de fin de message importante, dans cet exemple égale à $2 \times T_w$ séparant les instants $t_4$ et $t_8$, mais pas de trous intra-messages. On appelle un trou intra-message, un top de cadencement d'horloge sur lequel aucun quantum d'un message n'est transmis, compris entre deux tops de cadencement d'horloge pour lesquels un quantum du message est transmis.

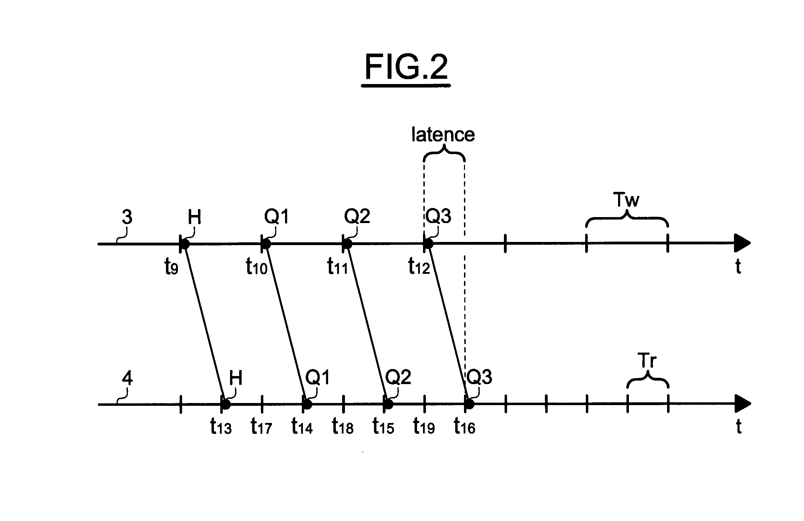

La figure 2 illustre l'algorithme "trou de ver" utilisé par un dispositif comprenant un moyen de commutation autonome 5 et un moyen de mémorisation 7 de type premier entré premier sorti à une entrée et une sortie, pour au moins une des entrées du dispositif, ayant respectivement des fréquences de cadencement d'horloges $F_w$ et $F_r$. Sur cet exemple, les fréquences de cadencement d'horloges sont telles que $F_r = 2 \times F_w$. L'axe 1 représente le temps et les tops d'horloge sur une entrée du dispositif, avec une période $T_w$ séparant deux tops d'horloge correspondant à la fréquence $F_w$. L'axe 2 représente le temps et les tops d'horloge sur une sortie du dispositif, avec une période $T_r$ séparant deux tops d'horloge correspondant à la fréquence $F_r$. Nous traitons en exemple un message composé de 4 quantums de données, un en-tête de message H suivi des quantums $Q_1$, $Q_2$ et $Q_3$, identique à l'exemple décrit par la figure 1.

La stratégie "trou de ver" stocke en mémoire, sous forme de file FIFO, le message en entrée composé des quantums H, $Q_1$, $Q_2$ et $Q_3$. A un instant $t_9$, le quantum H arrive en entrée et est stocké en mémoire 7, puis arrivent et sont stockés respectivement les quantums $Q_1$, $Q_2$ et $Q_3$ aux instants $t_{10}$, $t_{11}$, et $t_{12}$ correspondants à des tops consécutifs de cadencement de l'horloge en entrée. Dès le premier quantum d'en-tête stocké à l'instant $t_9$, celui-ci est transmis sur le top suivant $t_{13}$ de l'horloge de la sortie sur laquelle le moyen de commutation autonome transmet le message. De même, respectivement, pour les quantums $Q_1$, $Q_2$ et $Q_3$, dès que l'un est stocké dans la mémoire 7, respectivement aux instants $t_{10}$, $t_{11}$, et $t_{12}$, il est, dès le top de cadencement de l'horloge de sortie suivant le top de cadencement de l'horloge d'entrée sur laquelle arrive le quantum, respectivement aux instants $t_{14}$, $t_{15}$, et $t_{16}$ transmis par le moyen de commutation autonome.

Comme on le voit sur la figure 2, la latence de fin de message est réduite, ici égale à $T_r$, soit quatre fois plus petite que dans l'exemple de la figure 1. Cependant, en contrepartie, on introduit un grand nombre de trous intra-message, ici trois, pour un message de quatre quantums, aux instants $t_{17}$, $t_{18}$, et $t_{19}$. Il en résulte une non optimisation de l'utilisation de la bande passante du réseau et un contrôle d'intégrité des messages qui ne peut pas être fait au niveau d'un routeur, mais uniquement au niveau de l'agent final.

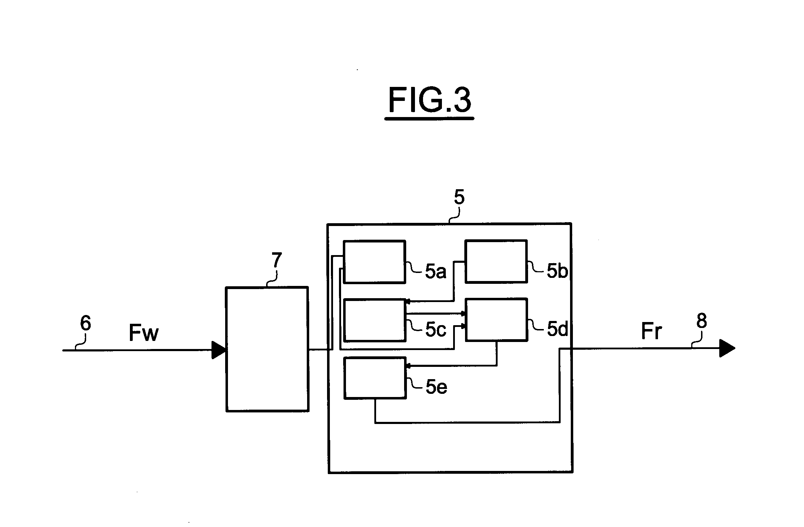

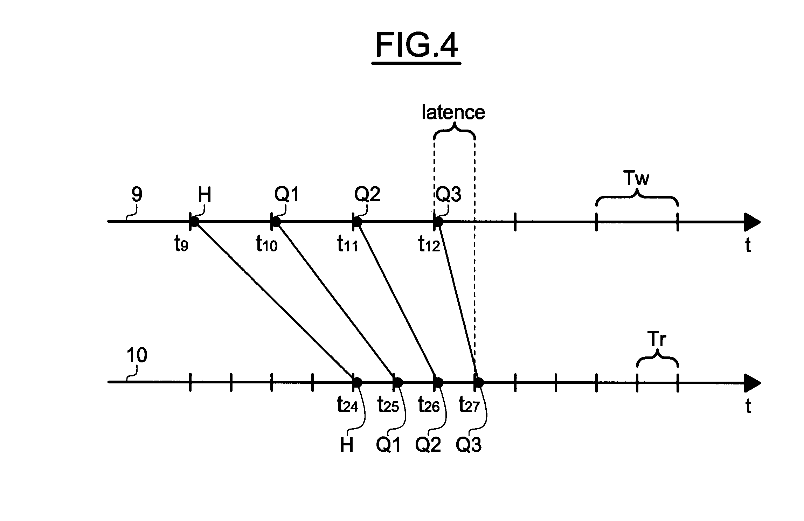

La figure 3 représente un dispositif selon un aspect de l'invention, comprenant un moyen de commutation autonome 5, et au moins une entrée 6 munie d'un moyen de mémorisation 7 de type file FIFO à une entrée et une sortie, et au moins une sortie 8. La fréquence de l'horloge de cadencement de l'entrée 6 est $F_w$, et fréquence de l'horloge de cadencement de la sortie 8 est $F_r$. Le moyen de commutation autonome 5 met en oeuvre le procédé décrit en référence à la figure 4. Il comprend un moyen 5a de traitement de données, par exemple la lecture de la longueur L du message dans le quantum d'en-tête H et la détermination de la quantité de données présentes dans la mémoire 7, un moyen 5b de détermination de la fréquence de cadencement d'horloge de l'entrée sur laquelle arrive le message et de détermination de la fréquence de cadencement d'horloge de la sortie sur laquelle est transmis le message. Il comprend également un moyen de calcul 5c, et un moyen de comparaison 5d. Le moyen de calcul 5c effectue le calcul d'un coefficient $\alpha$ égal à

$$\mathrm{Max}\left(0\;;1-\frac{F_w}{F_r}\right),$$

et le moyen de comparaison 5d compare la quantité de données présentes dans la mémoire 7, au produit $\alpha \times L$. Le moyen 5a de traitement transmet la longueur L du message et la quantité de données stockées dans la mémoire 7 au moyen de comparaison. Le moyen 5b fournit les fréquences de cadencements d'horloge $F_w$ et $F_r$ au moyen 5c de calcul, qui fournit le coefficient $\alpha$ au moyen de comparaison 5d. Le moyen de comparaison 5d transmet une information à un moyen 5e de déclenchement de la transmission du message lorsque la quantité de données stockées en mémoire 7 est supérieure au produit $\alpha \times L$, et le moyen 5e déclenche la transmission du message.

La figure 4 décrit la transmission d'un message de quantums H, $Q_1$, $Q_2$ et $Q_3$. Les quantums H, $Q_1$, $Q_2$ et $Q_3$, arrivent en entrée du dispositif respectivement aux instants $t_{20}$, $t_{21}$, $t_{22}$ et $t_{23}$ correspondants à des tops successifs de cadencement d'horloge de l'entrée sur laquelle arrive le message, de fréquence $F_w$, et sont stockés dans la mémoire 7.

Dans l'exemple de la figure 4, les fréquences de cadencement d'horloges sont telles que $F_r = 2 \times F_w$. L'axe 9 représente le temps et les tops d'horloge sur ladite entrée du dispositif, avec une période $T_w$ séparant deux tops d'horloge correspondant à la fréquence $F_w$. L'axe 10 représente le temps et les tops d'horloge sur une sortie du dispositif, avec une période $T_r$ séparant deux tops d'horloge correspondant à la fréquence $F_r$.

Le moyen de commutation autonome 5 calcule le coefficient $\alpha$ défini par la relation :

$$\alpha = \mathrm{Max}\left(0\;;1-\frac{F_w}{F_r}\right)$$

Le coefficient $\alpha$ sert à effectuer, par exemple par le moyen de commutation autonome 5, une comparaison entre la quantité de données stockées dans la mémoire 7, et le produit de la longueur L du message par le coefficient $\alpha$. La longueur L du message est contenue dans l'en-tête H. Dès que la quantité de données stockées en mémoire 7 est supérieure au produit $\alpha \times L$, on déclenche la transmission dudit message à partir du top suivant de cadencement d'horloge de la sortie sélectionnée. Sur l'exemple, ce top de cadencement d'horloge de la sortie sélectionnée correspond à l'instant $t_{24}$.

Puis, à chaque top de cadencement suivant d'horloge $t_{25}$, $t_{26}$, et $t_{27}$ successifs, les quantums $Q_1$, $Q_2$ et $Q_3$ sont respectivement transmis.

Ce procédé permet donc de garder une latence de fin de message minimale, comme dans le cas de l'algorithme "trou de ver", ici égale à $T_r$, mais sans insérer de trous intra-message. De cette manière, on crée plutôt des trous inter-messages, ce qui permettra d'augmenter le débit global du réseau en pouvant facilement intercaler un message dans ces trous inter-messages.

Dans les cas limites, comme par exemple les cas où $\alpha=0$, soit quand $F_w$ est très supérieur à $F_r$ ou lorsque $F_w = F_r$, alors le routage coïncide avec celui de l'algorithme "trou de ver". Dans le cas où $F_w$ est très inférieur à $F_r$ alors $\alpha=1$, et le routage coïncide avec celui de l'algorithme "stocke et transmet".

En d'autres termes, dans les cas limites, on utilise des algorithmes de routage connus, et dans les autres cas, on utilise un nouveau routage.

Lorsque les fréquences $F_w$ et $F_r$ sont connues, $\alpha$ est connu et fixé par l'utilisateur, et peut être mémorisé pour ne pas être sans cesse recalculé.

Lorsque les horloges de cadencement sont régulières, c'est-à-dire si les tops d'horloges sont émis de manière reconnaissable, même lorsqu'aucune donnée n'est transmise, il est aisé de calculer le rapport des fréquences.

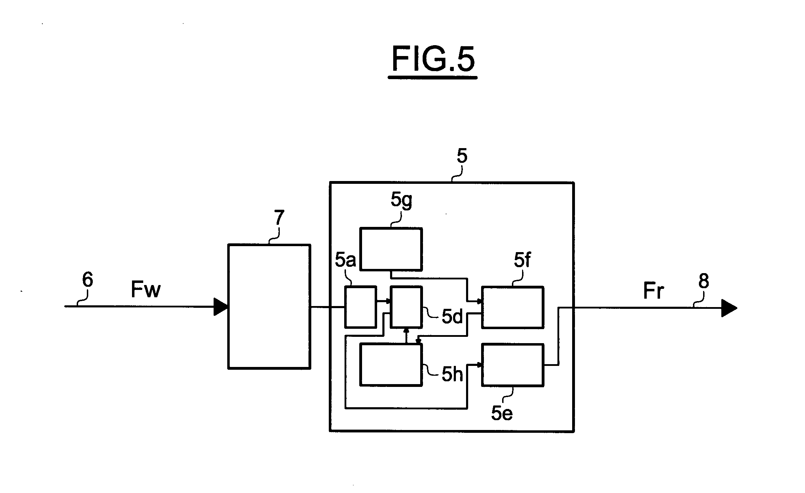

Un autre aspect de mise en application, représenté sur la figure 5, quand l'instabilité des grandeurs utilisées ne permet pas de calculer $\alpha$ comme décrit précédemment, est d'asservir $\alpha$ sur la présence de trous intra-messages, en ajustant $\alpha$ pour faire tendre le nombre de trous intra-messages vers un nombre très faible, par exemple un trou intra-message pour 10000 quantums transmis. En d'autres termes, si des trous intra-messages sont présents, $\alpha$ est petit et on peut alors l'augmenter, et si aucun trou intra-message n'est présent, $\alpha$ est grand et on peut le diminuer. Le dispositif comprend également le moyen 5d de comparaison et le moyen 5e de déclenchement de la transmission décrits précédemment, et en outre, un moyen d'asservissement 5f pour asservir $\alpha$ comme décrit ci-dessus un moyen 5g de détermination du nombre de trous intra-messages, qui transmet cette information au moyen d'asservissement 5f, et un moyen 5h gérant la valeur de $\alpha$. Le moyen 5h génère une première valeur de $\alpha$, qui est comprise entre 0 et 1, transmise aux moyens de comparaison 5d. Les moyens 5g estiment le taux de trous intra-messages, et le transmettent aux moyens d'asservissement 5f. Le moyen de comparaison 5d transmet une information à un moyen 5e de déclenchement de la transmission du message lorsque la quantité de données stockées en mémoire 7 est supérieure au produit $\alpha \times L$, et le moyen 5e déclenche la transmission du message. Si le taux de trous intra-message est trop grand, par rapport à une valeur prédéterminé, par exemple 1 sur 10000, le moyen d'asservissement 5f transmet une information au moyen 5h, qui va générer une nou-

velle valeur de $\alpha$ supérieure, et réciproquement, si le taux de trous intra-message est trop faible par rapport à ladite valeur prédéterminée, le moyen d'asservissement 5f transmet une information au moyen 5h, qui va générer une nouvelle valeur de $\alpha$ inférieure.

L'invention permet donc de mettre en oeuvre un algorithme de routage permettant d'améliorer le débit dans un réseau d'interconnexions, en gardant une latence de fin de messages minimale.

## Revendications

1. Procédé de transmission d'un message dans un dispositif comprenant un moyen de commutation autonome comprenant au moins une sortie, et au moins une entrée comprenant un moyen de mémorisation pourvu d'une entrée et une sortie, **caractérisé par le fait que** l'on élabore un coefficient ($\alpha$) représentatif du rapport des fréquences de cadencement d'horloges d'entrée ($F_w$) et de sortie ($F_r$), on compare la quantité de données stockées dans le moyen de mémorisation de l'entrée où arrive ledit message par rapport au produit dudit coefficient ($\alpha$) et de la longueur du message, et on décide dudit déclenchement lorsque la quantité de données stockées dans le moyen de mémorisation de l'entrée où arrive le message est supérieure au produit du coefficient ($\alpha$) par la longueur du message.

2. Procédé selon la revendication 1, **caractérisé par le fait que** l'on décide en outre dudit déclenchement lorsque le message est entièrement mémorisé dans le moyen de mémorisation de l'entrée où arrive le message.

3. Procédé selon la revendication 2, **caractérisé par le fait que** l'on décide en outre dudit déclenchement lorsque le moyen de mémorisation de l'entrée où arrive le message est plein.

4. Procédé selon la revendication 3, **caractérisé par le fait que**, le message comprenant un en-tête, on récupère en outre la longueur du message dans l'en-tête du message.

5. Procédé selon la revendication 4, **caractérisé par le fait** l'on élabore ledit coefficient ($\alpha$) par la relation suivante :

$$\alpha = \mathrm{Max}\left(0\,;1-\frac{F_w}{F_r}\right)$$

dans laquelle $F_w$ est la fréquence de cadencement d'horloge d'entrée ou d'écriture de l'entrée sur laquelle arrive le message, $F_r$ est la fréquence de cadencement d'horloge de sortie ou de lecture sur la sortie sur laquelle est transmis le message, et Max est la fonction maximum.

6. Procédé selon la revendication 5, **caractérisé par le fait que** lorsque lesdites fréquences de cadencement d'horloge d'entrée ($F_w$) et de sortie ($F_r$) sont des constantes connues, ledit paramètre ($\alpha$) est constant et est mémorisé.

7. Procédé selon la revendication 5, **caractérisé par le fait que** lorsque les horloges de cadencement des entrées et des sorties sont régulières, ledit moyen de prédiction comprend un moyen pour calculer le rapport desdites fréquences d'entrée ($F_w$) et de sortie ($F_r$).

8. Procédé selon la revendication 5, **caractérisé par le fait que** l'on asservit ledit paramètre ($\alpha$) sur un taux prédéterminé de présence de trous intra-messages dans les messages.

9. Dispositif de transmission d'un message, comprenant un moyen de commutation autonome dont au moins une entrée comprend un moyen de mémorisation pourvu d'une entrée et une sortie, **caractérisé par le fait qu'**il comprend un moyen d'élaboration d'un coefficient ($\alpha$) représentatif du rapport des fréquences de cadencement d'horloges d'entrée ($F_w$) et de sortie ($F_r$) d'une sortie sur laquelle est transmis le message, un moyen de comparaison de la quantité de données stockées dans le moyen de mémorisation de l'entrée où arrive ledit message par rapport au produit dudit coefficient ($\alpha$) et de la longueur (L) du message, calculé par un moyen de calcul (5c), et un moyen de déclenchement (5e) de la transmission du message lorsqu'un moyen de comparaison (5d) détecte une quantité de données stockées dans le moyen de mémorisation (7) de l'entrée où arrive le message supérieure au produit du coefficient ($\alpha$) par la longueur (L) du message.

10. Dispositif selon la revendication 9, **caractérisé par le fait que** le moyen de déclenchement (5e) de la transmission du message est apte à s'activer en outre lorsque le message est entièrement mémorisé dans le moyen de mémorisation (7) de l'entrée où arrive le message.

11. Dispositif selon la revendication 10, **caractérisé par le fait que** le moyen de déclenchement (5e) de la transmission du message est apte à s'activer en outre lorsque le moyen de mémorisation (7) de l'entrée où arrive le message est plein.

12. Dispositif selon la revendication 11, **caractérisé par le fait que**, le message comprenant un en-tête (H), le dispositif comprend un moyen de traitement (5a) apte à récupérer la longueur du message dans l'en-tête du message (H).

**13.** Dispositif selon l'une quelconque des revendications 9 à 12, **caractérisé par le fait que** le moyen de mémorisation (7) de l'entrée sur laquelle arrive le message est de type premier entré premier sorti.

## FIG.1

FIG.2

EP 1 501 245 A2

# FIG.3

FIG.4

EP 1 501 245 A2

FIG.5